# EUROPÄISCHE PATENTSCHRIFT

(11) **EP 1 162 002 B1**
(45) Veröffentlichungstag und Bekanntmachung des Hinweises auf die Patenterteilung: **12.11.2008**
(21) Anmeldenummer: 01110530.1
(22) Anmeldetag: 28.04.2001
(51) Int. Cl.: B05B 15/12

(54) **Pulversprühbeschichtungskabine**
Powder spray booth
Cabine de poudrage

(30) Priorität: 09.06.2000 DE 10028553
(43) Veröffentlichungstag der Anmeldung: 12.12.2001
(73) Patentinhaber: ITW Gema AG, 9015 St. Gallen (CH)
(72) Erfinder: Gelain, Silvano, 9030 Abtwil (CH)
(74) Vertreter: Vetter, Ewald Otto

(56) Entgegenhaltungen:
- EP-A- 0 032 810
- EP-A- 0 035 246
- WO-A-97/39833
- GB-A- 1 365 637

## Beschreibung

Die Erfindung betrifft eine Pulversprühbeschichtungskabine gemäß dem Oberbegriff des Anspruchs 1.

Eine Pulversprühbeschichtungskabine dieser Art ist aus der DE 198 37 877 A1 bekannt. Sie zeigt eine vertikalzylindrische Kabine mit einer ebenen Bodenplatte. Durch die Bodenplatte erstreckt sich quer zum Objekt-Transportweg diametral ein Schlitz, in welchen auf dem Kabinenboden liegende Pulverpartikel durch eine rotierende Reinigungsvorrichtung geschoben werden können. Aus der EP 0 839 583 A2 ist eine zylindrische Kabine mit einem trichterförmigen Kabinenboden bekannt, welcher im Kabinenzentrum einen Sauganschluss für eine externe Saugquelle hat. Eine ähnliche zylindrische Pulversprühbeschichtungskabine ist aus der DE 195 00 872 A1 bekannt. Sie hat zusätzlich zu dem als Absaugtrichter ausgebildeten Kabinenboden einen rinnenartigen Bodenrand entlang der Kabinenwand, über welchen getrennt vom Absaugstrom des Absaugtrichters ebenfalls Luft und Pulverpartikel aus der Kabine absaugbar sind. Die WO 97/39833 zeigt eine zylindrische Kabine, welche zwei Absaugkanäle aufweist, die auf einander diametral gegenüberliegenden Seiten der Kabine vertikal angeordnet sind und zum Kabineninnenraum hin einen offenen Längsschlitz haben.

Sprühbeschichtungspulver wird üblicherweise pneumatisch zu Sprühvorrichtungen, so genannten Sprühpistolen, gefördert und von diesen pneumatisch und durch elektrostatische Unterstützung auf die zu beschichtenden Objekte gesprüht. In den Sprühbeschichtungskabinen wird während des Sprühbeschichtungsbetriebes ein kleiner Unterdruck aufrecht erhalten, damit keine Pulverpartikel aus der Sprühbeschichtungskabine nach außen dringen und auch zum Absaugen von Überschußpulver (vom Objekt abprallende oder an ihm vorbei gesprühte Pulverpartikel). Überschußpulver wird abgesaugt zur Vermeidung von hohen Konzentrationen, welche zu Pulverstaub-Explosionen führen können, und auch zur Rückgewinnung und Wiederverwertung. Je größer die zu beschichtenden Objekte sind, desto größer wird der aus dem Kabineninnenraum abzusaugende Abluftvolumenstrom. Dieser wird durch eine Saugquelle (Gebläse) erzeugt, welches an die Absaugkanalanordnung anschließbar ist. Der Abluftvolumenstrom besteht aus Luft des pneumatisch geförderten Pulvers und aus Luft, welche durch Kabinenöffnungen, insbesondere durch die Objekt-Wanddurchgänge der Kabinenwand in die Kabine angesaugt wird, und aus Überschußpulver.

Durch die Erfindung soll die Aufgabe gelöst werden, die Sprühbeschichtungsgeschwindigkeit insbesondere bei großen zu beschichtenden Objekten zu steigern, ohne daß in der Kabine nachteilige Luft-oder Pulverströmungen entstehen. Ferner sollen die Beschichtungsqualität und der Beschichtungswirkungsgrad verbessert werden. Die Konstruktion soll einfach und preiswert sein und einen schnellen Pulverwechsel (Wechsel der Pulverart) ermöglichen.

Diese Aufgabe wird gemäß der Erfindung durch die Merkmale des Anspruchs 1 gelöst.

Weitere Merkmale der Erfindung sind in den Unteransprüchen enthalten.

Durch die Erfindung kann mit wesentlich größeren Abluftvolumenströmen gearbeitet werden als beim Stand der Technik, ohne daß im Kabineninnenraum Luftströmungen entstehen, welche für den Wirkungsgrad und/oder die Beschichtungsqualität nachteilig sind. Durch die Erfindung wird unter den zu beschichtenden Objekten im Beschichtungsbereich der Kabine die Luftströmungsgeschwindigkeit der Abluft wesentlich reduziert, wohingegen beim Stand der Technik gerade im Beschichtungsbereich und darunter hohe Luftströmungsgeschwindigkeiten erzeugt werden.

Ein weiterer wesentlicher Vorteil der Erfindung besteht darin, daß kein tiefer Trichter als Kabinenboden mehr erforderlich ist und auch die Absaugkanalanordnung unter dem Kabinenboden wesentlich flacher ausgebildet werden kann, so daß für diese Unterbauten der Kabine keine Baugrube mehr erforderlich ist und die Pulversprühbeschichtungskabine ohne Baugrube aufgestellt werden kann, ohne daß dadurch der Kabineninnenraum auf einem höheren Niveau als beim Stand der Technik zu liegen kommt.

Die Erfindung ist insbesondere bei vertikalzylindrischen Kabinen von Vorteil, kann jedoch auch vorteilhaft für Beschichtungskabinen verwendet werden, deren Innenraum im Horizontalquerschnitt quadratisch oder rechteckig oder oval oder dgl. ist. "Vertikalzylindrisch" bedeutet, daß der Beschichtungsraum der Kabine die Form eines vertikalen Zylinders hat. Dieser Zylinder hat innen vorzugsweise einen kreisrunden horizontalen Querschnitt, kann jedoch auch die Form eines andersartig bogenförmigen Querschnittes oder einen Vieleck-Querschnitt haben. Eckige Querschnitte sind jedoch schlechter zu reinigen als bogenförmige oder runde und können auch nachteilige Luftströmungen erzeugen.

Die Erfindung wird im folgenden mit Bezug auf die Zeichnungen anhand einer bevorzugten Ausführungsform als Beispiel beschrieben. In den Zeichnungen zeigen
- Fig. 1: eine Draufsicht auf einen horizontalen Querschnitt einer vertikalzylindrischen, kreisrunden Pulversprühbeschichtungskabine nach der Erfindung,
- Fig. 2: einen Vertikalschnitt der Pulversprühbeschichtungskabine von Fig. 1 längs der Ebene II-II,
- Fig. 3: einen Vertikalschnitt der Pulversprühbeschichtungskabine von Fig. 1 längs der Ebene III-III,
- Fig. 4: schematisch eine Draufsicht in eine andere Pulversprühbeschichtungskabine,
- Fig. 5: schematisch einen Vertikalabschnitt einer Pulversprühbeschichtungskabine gemäß einer nochmals weiteren Ausführungsform nach der Erfindung.

Die in den Zeichnungen dargestellte Pulversprühbeschichtungskabine nach der Erfindung enthält zwei einander diametral gegenüberliegend angeordnete Objekt-Wanddurchgänge 2 und 4 für den Transport von zu beschichtenden Objekten 6 durch die Pulversprühbeschichtungskabine und einen Kabinenboden 8.

Die Breite der Objekt-Durchgänge 2 und 4 begrenzt die maximale Breite des Objekt-Transportweges 16, d.h. die maximale Breite der beschichtbaren Objekte 6.

Eine Absaugkanalanordnung 10 ist am unteren Ende des Kabineninnenraumes 12 zum Absaugen von Luft und Überschußpulver aus dem Kabineninnenraum 12 angeordnet. Die Absaugkanalanordnung 10 ist für eine ungleiche Verteilung des Abluftvolumenstromes in der Weise ausgebildet, daß längs des Objekt-Transportweges 16 betrachtet mindestens der überwiegende Anteil oder die Gesamtheit der Kabinenabluft durch zwei kabinenendseitige Absaugdurchgänge 22 und 24, die nahe bei den Objekt-Wanddurchgängen 2 bzw. 4 im Kabinenboden 8 oder in der Kabinenwand angrenzend an den Kabinenboden 8 vorgesehen sind, aus dem Kabineninnenraum abströmt. Der Abluftvolumenstrom 18 enthält Überschußpulver. Das Überschußpulver ist von den zu beschichtenden Objekten 6 gegebenenfalls abprallendes Pulver und an den Objekten von einer Sprühvorrichtung 26 gegebenenfalls vorbei gesprühtes Pulver. Die Breite, Höhe und Position des Objekttransportweges ist durch die Objekt-Wanddurchgänge 2 und 4 definiert, durch die er sich hindurcherstreckt.

In der im Horizontalquerschnitt vorzugsweise kreisrunden Kabinenwand 28, welche in Objekt-Förderrichtung 30 gesehen aus einer linken Wandhälfte 28-1 und einer rechten Wandhälfte 28-2 besteht, vorzugsweise je aus Kunststoff, ist mindestens ein Sprühvorrichtungsschlitz 32 gebildet, durch welchen eine oder mehrere Sprühvorrichtungen 26 in den Kabineninnnenraum 12 gerichtet werden können, die von einer außerhalb der Pulversprühbeschichtungskabine angeordneten Hubvorrichtung 34 oder einer anderen Trägervorrichtung getragen werden und im Sprühvorrichtungsschlitz 32 relativ zur Kabinenwand 28 bewegbar sind.

Der Kabinenboden 8 besteht aus einem in Objekt-Förderrichtung 30 gesehen linken seitlichen Bodenbereich 8-1 und einem rechten seitlichen Bodenbereich 8-2, einem sie in Kabinenquerrichtung miteinander verbindenden Absaugkanal 36, welcher sich parallel zur Objekt-Förderrichtung 30 zwischen den beiden Absaugdurchgängen 22 und 24 erstreckt und diese miteinander verbindet, und vorzugsweise einer Haube oder Kanalabdeckung 38, welche den Absaugkanal 36 mit Ausnahme im Bereich der Absaugdurchgänge 22 und 24 und mit Ausnahme von zwei sich in Kanallängsrichtung erstreckenden Absaugschlitzen 40 und 42 überdeckt. Die Kanalabdeckung 38 bildet einen Teil des Kabinenbodens. Sie hat vorzugsweise die Form eines Satteldaches mit einer sich in Objekt-Förderrichtung erstreckenden Dachfirstlinie 44. Die Kanalabdeckung 38 kann einschließlich ihrer Dachfirstlinie 44 luftdicht sein.

Die Breite des Absaugkanals 36 ist kleiner als die Breite des schematisch bei 16 angezeigten Objekt-Transportweges und damit auch kleiner als die Breite der beiden Objekt-Wanddurchgänge 2 und 4.

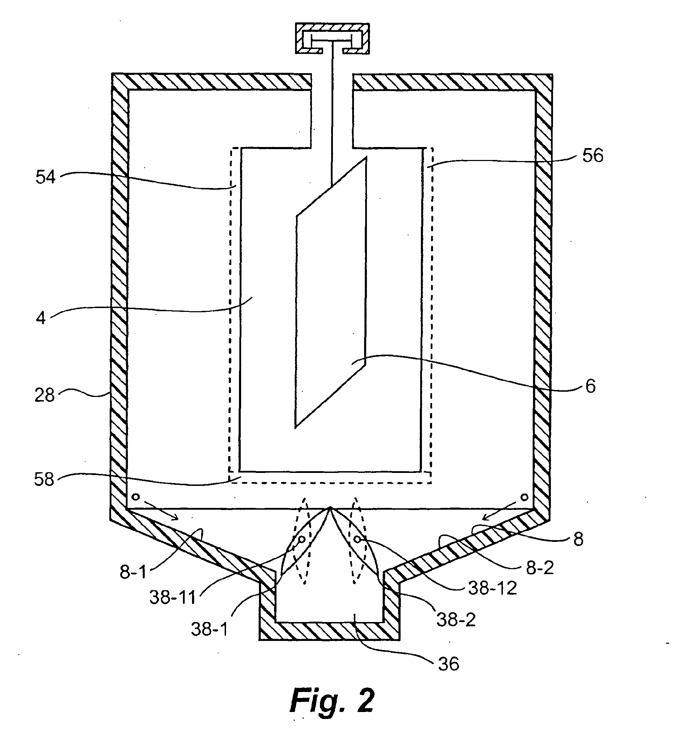

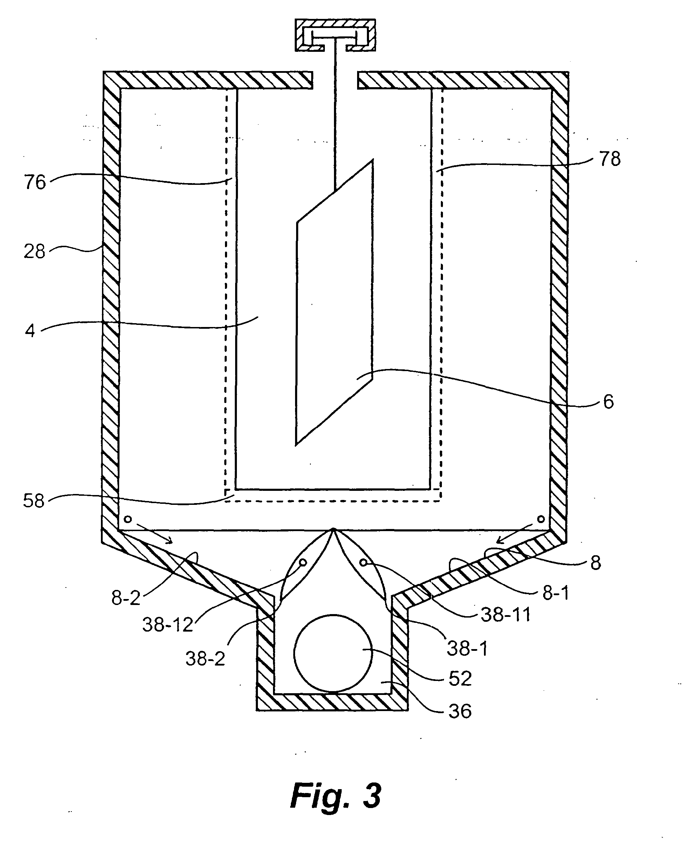

Die beiden seitlichen Bodenbereiche 8-1 und 8-2 sind quer zum Objekt-Transportweg 16 von den Kabinenwandhälften 28-1 und 28-2 bis zu dem zwischen ihnen gebildeten Absaugkanal keilförmig schräg abfallend angeordnet, so daß der Kabinenboden im vertikalen Querschnitt gesehen die in Fig. 2 und 3 gezeigte Keilform, oder Form einer keilartigen Rinne, hat und auf ihnen liegendes Überschußpulver von Druckluft 48 in den tiefer als sie gelegenen Absaugkanal 36 getrieben werden kann. Die Druckluft 48 wird von einer Druckluftverteilerleitung 50 vom Bereich der Kabinenwand 28 über die seitlichen Bodenbereiche 8-1 und 8-2 in Richtung zum Absaugkanal 36 getrieben. Die Druckluft 48 wird zusammen mit weiterer Luft in der Kabine von der Saugwirkung eines nicht gezeigten Sauggebläses durch die Absaugdurchgänge 22 und 24 und die Absaugschlitze 40 und 42 in den Absaugkanal 36 gesaugt und gelangt von diesem über einen Sauganschluß 52 und dann über einen Pulverabscheider zum Abscheiden von Pulverpartikeln, z.B. einen Zyklon und einen nachgeordneten Filter, über das nicht gezeigte Sauggebläse in das Freie.

Die Druckluftverteilerleitung 50 besteht aus einem sich je direkt auf dem seitlichen Bodenbereich 8-1 bzw. 8-2 oder nahe bei diesem entlang der Kabineninnenumfangsfläche der linken Wandhälfte 28-1 bzw. der rechten Wandhälfte 28-2 erstreckenden Leitungsabschnitt 50-1 bzw. 50-2, der sich jeweils von dem einen bis zum anderen Objekt-Wanddurchgang 2 und 4 erstreckt. Die Leitungsabschnitte 50-1 und 50-2 können von der Kabinenwand einen wenige Millimeter breiten Abstand haben, damit sich dazwischen keine Pulverpartikel ansammeln können und Pulverpartikel durch den Abstandsbereich hindurch mit Druckluft manuell abgeblasen werden können.

Die Kanalabdeckung 38 besteht vorzugsweise aus zwei Abdeckungsteilen 38-1 und 38-2, die je eine "Dachhälfte" der satteldachartigen Kanalabdeckung 38 bilden und an der Dachfirstlinie 44 aneinander anliegen. Die beiden Abdeckungsteile 38-1 und 38-2 sind je um eine Drehachse 38-11 bzw. 38-12 manuell und/oder motorisch zwischen der dargestellten, in der Dachfirstlinie 44 geschlossenen Betriebsstellung für den Pulversprühbeschichtungsbetrieb und einer an der Dachfirstlinie 44 voneinander entfernten Reinigungsstellung für Reinigungszwecke drehbar, welch letztere in Fig. 2 durch gestrichelte Linien schematisch dargestellt ist. In dieser durch gestrichelte Linien schematisch dargestellten Reinigungsstellung ist der Absaugkanal 36 oben offen, so daß eine Person mit einer Druckluftlanze Druckluft nicht nur auf die Kabinenwand 28 und den Kabinenboden 8, sondern auch auf beide Seiten der Abdeckungsteile 38-1 und 38-2 richten kann, um davon Pulverpartikel abzublasen, so daß sie von der Saugwirkung des Sauganschlusses 52 abgesaugt werden, um den Kabineninnenraum zu reinigen.

Der Strömungsdurchtrittsquerschnitt der beiden Absaugschlitze 40 und 42 ist zusammen wesentlich kleiner als der Strömungsdurchtrittsquerschnitt der beiden Absaugdurchgänge 22 und 24 zusammen, vorzugsweise auch kleiner als der Strömungsdurchtrittsquerschnitt von jedem einzelnen der beiden Absaugdurchgänge 22 und 24.

Die in Querrichtung gesehene Mitte des Absaugkanals 36 fluchtet mit der Breiten-Mitte der Objekt-Wanddurchgänge 2 und 4. Die Dachfirstlinie 44 fluchtet vorzugsweise ebenfalls mit der Breiten-Mitte dieser Objekt-Wanddurchgänge 2 und 4.

In der Beschichtungsbetriebsstellung der Abdeckungsteile 38-1 und 38-2 ist der Zentrumsbereich der Kabine, in welchem die Objekte 6 beschichtet werden, vorzugsweise völlig frei von Absaugöffnungen. Die beiden seitlichen Bodenbereiche 8-1 und 8-2 neben dem Absaugkanal 36 sind vorzugsweise ebenfalls völlig frei von Absaugöffnungen. Dadurch wird der größere Anteil des Abluftvolumenstromes, oder der gesamte, durch die beiden Absaugdurchgänge 22 und 24 gesaugt, welche auf die beiden Kabinenenden an den Objekt-Wanddurchgängen 2 und 4 begrenzt sind. Dadurch wird-gegenüber dem Stand der Technik der Absaugvolumenstrom vom Kabinenzentrum weg zu den beiden Objekt-Wanddurchgängen 2 und 4 hin verlagert.

### Varianten in der Ausführungsform der Erfindung:

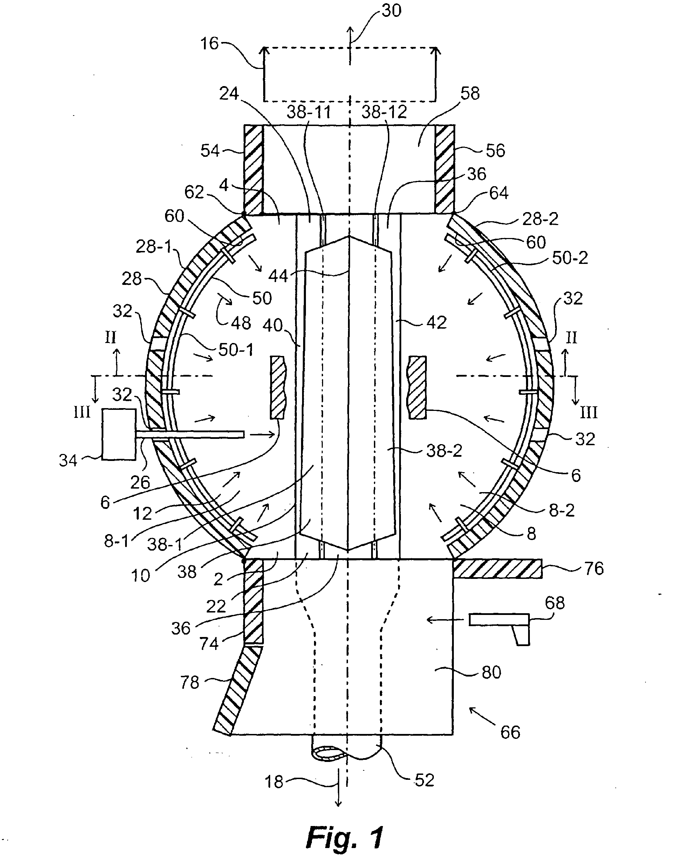

Anstelle von zwei Absaugschlitzen 40 und 42 kann nur ein einziger Absaugschlitz vorgesehen sein. Dieser kann an der in Fig. 1 gezeigten Stelle oder in der Mitte des Absaugkanals 36 in dessen Längsrichtung sich erstrecken. Die Kanalabdeckung 38 kann aus feststehenden Elementen anstelle von schwenkbar angeordneten Abdeckteilen bestehen. Die Absaugschlitze 40 und 42 können ersatzlos weggelassen werden, so daß der gesamte Kabinenboden 8 luftdicht verschlossen ist, mit Ausnahme der beiden Absaugdurchgänge 22 und 24. Die beiden seitlichen Bodenbereiche 8-1 und 8-2 können anstatt trichterförmig oder keilförmig nach innen, dachartig nach außen abfallend angeordnet sein. In diesem Falle ist es zweckmäßig, Pulverabsaugöffnungen im Kabinenboden 8 entlang der Kabinenwand 28 vorzusehen oder in dieser Kabinenwand zu bilden. Auf der Firstlinie eines solchen satteldachartigen Kabinenbodens 8 besteht die Möglichkeit, Druckluftauslaßöffnungen vorzusehen, durch welche Druckluft auf dem Kabinenboden liegendes Pulver zu den Absaugöffnungen treiben kann.

Vermutlich aus dem gleichen Grund, warum in ein Rohr abfließendes Wasser, z.B. in den Ablauf einer Badewanne abfließendes Wasser, eine Wirbelströmung bildet, entsteht auch in einer zylindrischen Pulversprühbeschichtungskabine, deren Zylinderachse vertikal ist, ein wirbelartiger Luftstrom in Umfangsrichtung der Kabine. Diese Wirbelströmung hat den Nachteil, daß sie Luft in die Kabine hineinsaugt und die Pulverpartikel von ihren idealen Fluglinien zwischen der Sprühvorrichtung 26 und dem Objekt 6 ablenkt. Um eine solche Wirbelstrombildung zu erschweren, ist gemäß der Erfindung mindestens einer der beiden Objekt-Wanddurchgänge 2 und/oder 4, bei der in den Zeichnungen dargestellten Ausführungsform der Objektausgangs-wanddurchgang 4, als Kanal ausgebildet, der von der Kabinenaußenseite wegragende Kanalseitenwände 54 und 56 und einen von der Kabinenaußenseite wegragenden Kanalboden 58 hat, vorzugsweise auch noch ein Kanaldach aufweist. Diese verhindern, daß Luft von der Kabinenaußenseite tangential zur Kabineninnenumfangsfläche 60 in den Kabineninnenraum 12 durch den betreffenden Objekt-Wanddurchgang 2 bzw. 4 hindurch einströmen kann. Gemäß der gezeigten bevorzugten Ausführungsform können die Kanalseitenwände 54 und 56 durch zwei im wesentlichen parallel zueinander offen stehende Türflügel 54 und 56 gebildet sein, welche je um eine Vertikalachse 62 bzw. 64 an der Kabinenwand 28 schwenkbar befestigt sind. Die beiden Türflügel 54 und 56 können in eine den Objekt-Wanddurchgang 4 schließende Stellung geschwenkt werden zum Reinigen der Pulversprühbeschichtungskabine. Zum Reinigen kann eine Person durch den betreffenden anderen, offenen Objekt-Wanddurchgang 2 hindurch mit Druckluft einer Druckluftlanze den Kabineninnenraum 12 ausblasen. Das von den Oberflächen abgeblasene Beschichtungspulver wird gleichzeitig durch den Absaugkanal 36 abgesaugt.

Ferner kann der gleiche oder der andere Objekt-Wanddurchgang, bei der gezeigten Ausführungsform der objekt-einlaufseitige Wanddurchgang 2, mit einem Handbeschichtungsplatz 66 versehen sein, welcher auf der Kabinenaußenseite an den Objekt-Wanddurchgang 2 angrenzt und an welchem die zu beschichtenden Objekte 6 mit manuellen Sprühpistolen 68 beschichtbar sind. Auch dieser Objekt-Wanddurchgang 2 kann durch zwei Türflügel 74 und 76 für den Sprühbeschichtungsbetrieb geöffnet und für den Reinigungsbetrieb geschlossen werden. Der eine Türflügel 74 dient vorzugsweise als Rückwand des Handbeschichtungsplatzes 66, welche zusätzlich durch eine ortsfeste Rückwand 78 verlängert sein kann. Die der Rückwand 74, 78 gegenüber liegende Platzseite ist offen für die manuelle Sprühpistole 68. An die Rückwand 74, 78 kann sich ebenfalls ein offener Handbeschichtungsplatzbereich anschließen, um die Objekte 6 von der anderen Seite beschichten zu können. Unter dem Objekt-Bewegungsweg schließt sich an die Kabinenaußenseite zwischen den beiden Türen 74 und 76 ein Boden 80 des Handbeschichtungsplatzes an. Während Sprühbeschichtungsvorgängen im Kabineninnenraum 12 können auch diese beiden Türflügel 74 und 76 des objekt-einlaufseitigen Wanddurchganges 2 parallel zueinander in Offenstellung gestellt werden, um den Schleuseneffekt zu erzeugen, wie dies mit Bezug auf den einen Objekt-Wanddurchgang 4 beschrieben wurde, um ein tangentiales Einströmen von Luft in den Kabineninnenraum 12 zu verhindern und damit einer Wirbelstrombildung im Kabineninnenraum entgegenzuwirken. Dies zeigt, daß auch der Schleusenkanal des objekt-ausgangsseitigen Wanddurchganges 4 je nach Stellung von dessen Türflügeln 54 und 56 wahlweise als Handbeschichtungsplatz oder als Kanal (Schleuse) ausgebildet werden, welcher ein tangentiales Einströmen von Luft durch den Objekt-Wanddurchgang hindurch unterdrückt oder verhindert.

## Patentansprüche

1. Pulversprühbeschichtungskabine, enthaltend zwei einander gegenüberliegend angeordnete Objekt-Wanddurchgänge (2, 4) für den Transport von zu beschichtenden Gegenständen (6) durch die Pulversprühbeschichtungskabine längs eines Objekt-Transportwegs (16); einen Kabinenboden (8), welcher einen linken seitlichen Bodenbereich (8-1), einen rechten seitlichen Bodenbereich (8-2) und einen sie miteinander verbindenden Absaugkanal (36) aufweist; wobei der Absaugkanal (36) Teil einer Absaugkanalanordnung (22, 24, 36, 40, 42, 52) ist, die am unteren Ende des Kabineninnenraums (12) zum Absaugen von Luft und Überschusspulver aus dem Kabineninnenraum angeordnet ist;
**dadurch gekennzeichnet,**
**dass** der Absaugkanal (36) sich längs des Objekt-Transportwegs (16) erstreckt und die beiden Bodenbereiche (8-1, 8-2) in Kabinenquerrichtung miteinander verbindet; dass sich über den Absaugkanal (36) eine Haube oder Kanalabdeckung (38) erstreckt, mit Ausnahme im Bereich von zwei kabinenendseitigen Absaugdurchgängen (22, 24), von welchen einer nahe bei dem einen und der andere nahe bei dem anderen der beiden Objektdurchgänge (2, 4) angeordnet ist; wobei die Absaugkanalanordnung (22, 24, 36, 40, 42, 52) am unteren Ende des Kabineninnenraums (12) für eine ungleichmäßige Verteilung des Abluftvolumenstroms (18) in der Weise ausgebildet ist, dass längs des Objekt-Transportwegs (16) betrachtet mindestens der überwiegende Anteil des Abluftvolumenstroms (18) durch die kabinenendseitigen Absaugdurchgänge (22, 24) im Kabinenboden (22, 24) aus dem Kabineninnenraum abströmt.

2. Pulversprühbeschichtungskabine nach Anspruch 1,
**dadurch gekennzeichnet,**
**dass** die kabinenendseitigen Absaugdurchgänge (22, 24) mit einem ihnen gemeinsamen Sauganschluss (52) strömungsmäßig verbunden sind.

3. Pulversprühbeschichtungskabine nach einem der vorhergehenden Ansprüche,
**dadurch gekennzeichnet,**
**dass** zwischen der Haube oder Kanalabdeckung (38) und mindestens einem, vorzugsweise jedem, der beiden benachbarten Bodenbereiche (8-1, 8-2) ein sich in Kanallängsrichtung erstreckender Absaugschlitz (40, 42) gebildet ist.

4. Pulversprühbeschichtungskabine nach einem der vorhergehenden Ansprüche,
**dadurch gekennzeichnet,**
**dass** die beiden dem Absaugkanal (76) benachbarten seitlichen Bodenbereiche (8-1, 8-2) beidseitig vom Objekt-Transportweg (16) frei von Absaugöffnungen sind.

5. Pulversprühbeschichtungskabine nach einem der vorhergehenden Ansprüche,
**dadurch gekennzeichnet,**
**dass** die beiden seitlichen Bodenbereiche (8-1, 8-2) quer zum Objekt-Transportweg (16) von der Kabinenwand (28) bis zum Absaugkanal (36) hin keilförmig schräg abfallend angeordnet sind, und dass im Tal der Keilform, welches sich längs des Objekt-Transportwegs erstreckt, mindestens ein Absaugschlitz (40, 42), welcher sich längs des Objekt-Transportwegs erstreckt, zwischen der Haube oder Kanalabdeckung (38) und dem benachbarten seitlichen Bodenbereich (8-1, 8-2), gebildet ist.

6. Pulversprühbeschichtungskabine nach Anspruch 5,
**dadurch gekennzeichnet,**
**dass** der mindestens eine Absaugschlitz (40, 42), welcher in den unter ihm angeordneten Absaugkanal (36) mündet, schmäler ist als der Absaugkanal (36).

7. Pulversprühbeschichtungskabine nach einem der Ansprüche 3 bis 6,
**dadurch gekennzeichnet,**
**dass** der mindestens eine Absaugschlitz (40, 42) an seinen Längsenden in die kabinenendseitigen Absaugdurchgänge (22, 24) mündet.

8. Pulversprühbeschichtungskabine nach einem der vorhergehenden Ansprüche,
**dadurch gekennzeichnet,**
**dass** die Kanalabdeckung oder Haube (38) in Form von mindestens einem klappenartigen Abdeckungsteil (38-1, 38-2) ausgebildet ist, welches sich unter dem Objekt-Transportweg längs zu diesem erstreckt, um eine sich längs des Transportwegs erstreckende Drehachse (38-11, 38-12) drehbar angeordnet ist und um diese Drehachse über dem Absaugkanal (36) verbleibend zwischen einer den Absaugkanal überdeckenden Beschichtungsbetriebsstellung für den Pulverbeschichtungsbetrieb und einer ihn nicht überdeckenden Reinigungsstellung für Reinigungszwecke drehbar ist.

9. Pulversprühbeschichtungskabine nach Anspruch 8,
**dadurch gekennzeichnet,**
**dass** der mindestens eine Absaugschlitz (40, 42) in der Beschichtungsbetriebsstellung des drehbaren klappenartigen Abdeckungsteils (38-1, 38-2) durch einen Längsrand dieses Abdeckungsteils (38-1, 38-2) und einen ihm gegenüberliegenden Längsrand eines ortsfesten Bodenbereichs (8-1, 8-2) begrenzt ist.

10. Pulversprühbeschichtungskabine nach Anspruch 9,
**dadurch gekennzeichnet,**
**dass** zwei der genannten klappenartigen Abdeckungsteile (38-1, 38-2) dachartig und parallel nebeneinander angeordnet sind, und dass ihre voneinander abgewandten Längsränder je einen der Absaugschlitze (40, 42) begrenzen.

11. Pulversprühbeschichtungskabine nach Anspruch 10,
**dadurch gekennzeichnet,**
**dass** die einander benachbarten Längsrandbereiche der beiden kappenartigen Abdeckungsteile (38-1, 38-2) in der Beschichtungsbetriebsstellung aneinander anliegen und zusammen eine geschlossene Bodenfläche bilden, jedoch in der Reinigungsstellung voneinander Querabstand haben zum Hindurchblasen von Reinigungs-Druckluft durch den zwischen ihnen gebildeten Abstandsbereich.

12. Pulversprühbeschichtungskabine nach einem der vorhergehenden Ansprüche,
**dadurch gekennzeichnet,**
**dass** es eine vertikalzylindrische Kabine ist, von welcher mindestens ihr Kabineninnenraum die Form eines vertikalen Zylinders hat.

13. Pulversprühbeschichtungskabine nach Anspruch 12,
**dadurch gekennzeichnet,**
**dass** mindestens einer der beiden Objekt-Wanddurchgänge (2, 4) als Kanal ausgebildet ist, der von der Kabinenaußenseite in Längsrichtung des Objektbewegungswegs wegragende Kanalseitenwände (54, 56, 74, 76) und einen von der Kabinenaußenseite wegragenden Kanalboden (58, 80) hat.

## Claims

1. Powder spray-coating booth containing two object wall passages (2, 4), which are arranged opposite one another, for conveying articles (6) which are to be coated through the powder spray-coating booth along an object conveyor path (16); a booth base (8), which has a left-hand side base region (8-1), a right-hand side base region (8-2) and a suction duct (36) connecting them to one another; wherein the suction duct (36) is part of a suction duct arrangement (22, 24, 36, 40, 42, 52), which is arranged at the bottom end of the booth interior (12) for sucking air and excess powder out of the booth interior;
**characterized in that** the suction duct (36) extends along the object conveyor path (16) and connects the two base regions (8-1, 8-2) to one another in the booth transverse direction; **in that** a hood or duct cover (38) extends over the suction duct (36), except in the region of two booth-end suction passages (22, 24), of which one is arranged near one of the two object passages (2, 4) and the other is arranged near the other of the two object passages (2, 4); wherein the suction duct arrangement (22, 24, 36, 40, 42, 52), at the bottom end of the booth interior (12), is designed for uneven distribution of the outgoing-air volumetric flow (18) in such a way that, as seen along the object conveyor path (16), at least the predominating proportion of the outgoing-air volumetric flow (18) flows out of the booth interior through the booth-end suction passages (22, 24) in the booth base (22, 24).

2. Powder spray-coating booth according to Claim 1, **characterized in that** the booth-end suction passages (22, 24) are flow-connected to a common suction port (52).

3. Powder spray-coating booth according to one of the preceding claims, **characterized in that** a suction slot (40, 42) extending in the duct longitudinal direction is formed between the hood or duct cover (38) and at least one, preferably each, of the two adjacent base regions (8-1, 8-2).

4. Powder spray-coating booth according to one of the preceding claims, **characterized in that** both base side regions (8-1, 8-2) adjacent to the suction duct (76) do not contain any suction orifices on both sides of the conveyor path of the objects.

5. Powder spray-coating booth according to one of the preceding claims, **characterized in that** the two base side regions (8-1, 8-2) are arranged in such a manner as to drop down at an angle in the shape of a wedge, transversely with respect to the object conveyor path (16), from the booth wall (28) to the suction duct (36), and **in that** at least one suction slot (40, 42), which extends along the object conveyor path, is formed between the hood or duct cover (38) and the adjacent base side region (8-1, 8-2), in the valley of the wedge shape, which extends along the object conveyor path.

6. Powder spray-coating booth according to Claim 5, **characterized in that** the at least one suction slot (40, 42), which opens out into the suction duct (36) which is arranged beneath it, is narrower than the suction duct (36).

7. Powder spray-coating booth according to one of Claims 3 to 6, **characterized in that** the at least one suction slot (40, 42) opens out into the booth-end suction passages (22, 24) at its longitudinal ends.

8. Powder spray-coating booth according to one of the preceding claims, **characterized in that** the duct cover or hood (38) is designed in the form of at least one flap-like cover piece (38-1, 38-2) which extends beneath the conveyor path of the objects, longitudinally with respect thereto, is arranged in such a manner that it can rotate about a rotation pin (38-11, 38-12) extending along the conveyor path and can rotate about this rotation pin, over the suction duct (36), while remaining between an operational coating position, in which it covers the suction duct, for powder-coating mode and a cleaning position, in which it does not cover this duct, for cleaning purposes.

9. Powder spray-coating booth according to Claim 8, **characterized in that** the at least one suction slot (40, 42), in the operational coating position of the rotatable flap-like cover piece (38-1, 38-2), is delimited by a longitudinal edge of this cover piece (38-1, 38-2) and an opposite longitudinal edge of a stationary base region (8-1, 8-2).

10. Powder spray-coating booth according to Claim 9, **characterized in that** two of the said flap-like cover pieces (38-1, 38-2) are arranged in the manner of a roof and parallel next to one another, and **in that** their longitudinal edges which are remote from one another each delimit one of the suction slots (40, 42).

11. Powder spray-coating booth according to Claim 10, **characterized in that** the adjacent longitudinal-edge regions of the two flap-like cover pieces (38-1, 38-2) bear against one another in the operational coating position and together form a closed base area, but in the cleaning position are at a transverse distance from one another in order for compressed cleaning air to be blown through the gap formed between them.

12. Powder spray-coating booth according to one of the preceding claims, **characterized in that** it is a vertically cylindrical booth, at least the interior of which is in the form of a vertical cylinder.

13. Powder spray-coating booth according to Claim 12, **characterized in that** at least one of the two object wall passages (2, 4) is designed as a duct which has duct side walls (55, 56, 74, 76), which project away from the booth outer side in the longitudinal direction of the movement path of the objects, and a duct base (58, 80) which projects away from the booth outer side.

## Revendications

1. Cabine de poudrage, contenant deux passages de parois pour des objets (2, 4), disposés l'un en face de l'autre, pour le transport à travers la cabine de poudrage d'objets (6) à poudrer, le long d'une voie de transport d'objets (16) ; un fond de cabine (8) qui présente une région de fond latérale gauche (8-1), une région de fond latérale droite (8-2) et un canal d'aspiration (36) les reliant l'une à l'autre ; le canal d'aspiration (36) faisant partie d'un agencement de canal d'aspiration (22, 24, 36, 40, 42, 52) qui est disposé à l'extrémité inférieure de l'espace interne de la cabine (12) pour l'aspiration de l'air et de la poudre en excès hors de l'espace interne de la cabine ;
**caractérisée en ce que**
le canal d'aspiration (26) s'étend le long de la voie de transport d'objets (16) et relie l'une à l'autre les deux régions de fond (8-1, 8-2) dans la direction transversale de la cabine ; **en ce qu'**un capot ou un recouvrement de canal (38) s'étend au-dessus du canal d'aspiration (36), avec une exception dans la région de deux passages d'aspiration (22, 24) du côté de l'extrémité de la cabine, dont un est disposé près de l'un des deux passages d'objets (2, 4) et l'autre est disposé près de l'autre des deux passages d'objets (2, 4) ; l'agencement de canal d'aspiration (22, 24, 36, 40, 42, 52) étant réalisé à l'extrémité inférieure de l'espace interne de la cabine (12) pour une répartition irrégulière du débit d'air évacué (18) de telle sorte que, considéré le long de la voie de transport d'objets (16), au moins la majeure partie du débit d'air évacué (18) soit évacuée hors de l'espace interne de la cabine par les passages d'aspiration (22, 24) du côté de l'extrémité de la cabine dans le fond de la cabine (22, 24).

2. Cabine de poudrage selon la revendication 1,
**caractérisée en ce que**
les passages d'aspiration (22, 24) du côté de l'extrémité de la cabine sont connectés fluidiquement à un raccord d'aspiration (52) commun pour les deux.

3. Cabine de poudrage selon l'une quelconque des revendications précédentes,
**caractérisée en ce**
**qu'**une fente d'aspiration (40, 42) s'étendant dans la direction longitudinale du canal est formée entre le capot ou le recouvrement de canal (38) et au moins une, de préférence chacune, des deux régions de fond adjacentes (8-1, 8-2).

4. Cabine de poudrage selon l'une quelconque des revendications précédentes,
**caractérisée en ce que**
les deux régions de fond latérales (8-1, 8-2) adjacentes au canal d'aspiration (36) sont exemptes d'ouvertures d'aspiration de part et d'autre de la voie de transport d'objets (16).

5. Cabine de poudrage selon l'une quelconque des revendications précédentes,
**caractérisée en ce que**
les deux régions de fond latérales (8-1, 8-2) sont disposées transversalement à la voie de transport d'objets (16) de manière à descendre obliquement en forme de coin depuis la paroi de la cabine (28) jusqu'au canal d'aspiration (36), et **en ce qu'**au fond de la forme en coin, qui s'étend le long de la voie de transport d'objets, au moins une fente d'aspiration (40 ,42), qui s'étend le long de la voie de transport d'objets, est formée entre le capot ou le recouvrement de canal (38) et la région de fond latérale (8-1, 8-2) adjacente.

6. Cabine de poudrage selon la revendication 5,
**caractérisée en ce que**
l'au moins une fente d'aspiration (40, 42), qui débouche dans le canal d'aspiration (36) disposé sous elle, est plus étroite que le canal d'aspiration (36).

7. Cabine de poudrage selon l'une quelconque des revendications 3 à 6,
**caractérisée en ce que**
l'au moins une fente d'aspiration (40, 42) débouche au niveau de ses extrémités longitudinales dans les passages d'aspiration (22, 24) du côté de l'extrémité de la cabine.

8. Cabine de poudrage selon l'une quelconque des revendications précédentes,
**caractérisée en ce que**
le recouvrement de canal ou le capot (38) est réalisé sous la forme d'au moins une partie de recouvrement en forme de volet (38-1, 38-2), qui s'étend sous la voie de transport d'objets, le long de celle-ci, qui est disposée de manière à pouvoir tourner autour d'un axe de rotation (38-11, 38-12) s'étendant le long de la voie de transport, et qui peut tourner autour de cet axe de rotation en restant au-dessus du canal d'aspiration (36), entre une position de fonctionnement de revêtement recouvrant le canal d'aspiration, pour le fonctionnement de poudrage, et une position de nettoyage ne recouvrant pas le canal d'aspiration, pour des opérations de nettoyage.

9. Cabine de poudrage selon la revendication 8,
**caractérisée en ce que**
l'au moins une fente d'aspiration (40, 42) est limitée dans la position de fonctionnement de revêtement de la partie de recouvrement rotative en forme de volet (38-1, 38-2) par un bord longitudinal de cette partie de recouvrement (38-1, 38-2), et un bord longitudinal opposé d'une région de fond fixe (8-1, 8-2).

10. Cabine de poudrage selon la revendication 9,
**caractérisée en ce que**
deux desdites parties de recouvrement en forme de volet (38-1, 38-2) sont disposées en forme de toit et parallèlement l'une à côté de l'autre, et **en ce que** leurs bords longitudinaux opposés délimitent chacun l'une des fentes d'aspiration (40, 42).

11. Cabine de poudrage selon la revendication 10,
**caractérisée en ce que**
les régions de bords longitudinaux adjacentes des deux parties de recouvrement en forme de volet (38-1, 38-2) sont en appui l'une contre l'autre dans la position de fonctionnement de revêtement et forment ensemble une surface de fond fermée, mais sont espacées transversalement l'une de l'autre dans la position de nettoyage, pour souffler de l'air sous pression de nettoyage à travers la zone d'espacement formée entre elles.

12. Cabine de poudrage selon l'une quelconque des revendications précédentes,
**caractérisée en ce**
**qu'**il s'agit d'une cabine cylindrique verticale, dont au moins l'espace interne de cabine a la forme d'un cylindre vertical.

13. Cabine de poudrage selon la revendication 12,
**caractérisée en ce que**
au moins l'un des passages de parois pour des objets (2, 4) est réalisé sous la forme d'un canal, qui présente des parois latérales de canal (54, 56, 74, 76) saillant depuis le côté extérieur de la cabine dans la direction longitudinale de la voie de déplacement des objets et un fond de canal (58, 80) saillant depuis le côté extérieur de la cabine.
